# EUROPEAN PATENT APPLICATION

(11) **EP 4 429 388 A1**
(43) Date of publication of application: **11.09.2024**
(21) Application number: 22889980.3
(22) Date of filing: 02.11.2022
(51) Int. Cl.: H04W 74/08, H04W 4/70, H04W 72/0453

(54) **COMMUNICATION DEVICE, BASE STATION, AND COMMUNICATION METHOD**

(30) Priority: 02.11.2021 JP 2021179781
(71) Applicant: DENSO CORPORATION, Kariya-city, Aichi 448-8661 (JP); TOYOTA JIDOSHA KABUSHIKI KAISHA, Toyota-shi Aichi 471-8571 (JP)
(72) Inventor: MAEMOTO, Daiki, Kariya- city, Aichi 4488661 (JP); TAKAHASHI, Hideaki, Kariya- city, Aichi 4488661 (JP)
(74) Representative: TBK
(86) International application number: PCT/JP2022/040998
(87) International publication number: WO 2023/080160

(57) **Abstract**

A communication apparatus (100, 100B) with communication capabilities reduced as compared to another communication apparatus (100, 100A), the communication apparatus comprising: a receiver (121) configured to receive, from a base station (200), common configuration information which designates a designated bandwidth part number other than a bandwidth part number in which an initial bandwidth part used for the another communication apparatus (100, 100A) is configured and configures a separate initial bandwidth part different from the initial bandwidth part via a system information block; and a controller (140) configured to perform a random access procedure by using the separate initial bandwidth part.

## Description

### Cross-Reference to Related Applications

This application is based on and claims the benefit of priority of Japanese Patent Application No. 2021-179781, filed on November 2, 2021, the entire contents of which are incorporated herein by reference.

### Technical Field

The present disclosure relates to a communication apparatus, a base station, and a communication method.

### Background Art

In a 3rd Generation Partnership Project (hereinafter, 3GPP (registered trademark)) which is a mobile communication system standardization project, an initial bandwidth part that is a subset of a total bandwidth of a cell and is used for at least initial access is set in a communication apparatus. A method of configuring the initial bandwidth part by common signaling rather than dedicated signaling is specified as a method of configuring the initial bandwidth part (see Non Patent Literature 1).

According to the above-mentioned method, the initial bandwidth part configured by common signaling is configured in a communication apparatus as a bandwidth part (specifically, BWP #0) with a bandwidth part number of 0. BWP #0 is not regarded as a bandwidth part configured by radio resource control (RRC). On the other hand, bandwidth parts (BWP #1 to BWP #4) with bandwidth part numbers of 1 or larger are bandwidth parts configured by dedicated signaling and are bandwidth parts configured by RRC.

In recent years, introducing a communication apparatus (hereinafter, referred to as a RedCap UE as appropriate) with communication capabilities reduced compared to a general communication apparatus (hereinafter, referred to as a general communication apparatus as appropriate) into a 5G system has been reviewed in 3GPP. The RedCap UE is a communication apparatus with middle range performance and price for Internet of Things (IoT), and for example, is configured to be narrower in a maximum bandwidth of a bandwidth part used for radio communication or smaller in the number of receivers than the general communication apparatus.

Here, in introducing into a RedCap UE in the 3GPP mobile communication system, it has been agreed to configure an initial bandwidth part for the RedCap UE, that is, an initial bandwidth part (hereinafter, referred to as a separate initial bandwidth part as appropriate.) with a bandwidth narrower than that of an initial bandwidth part for a general communication apparatus, independently of the initial bandwidth part for the general communication apparatus (see Non Patent Literature 2).

### Citation List

### Non Patent Literature

Non Patent Literature 1: 3GPP technical specification TS38.331 V16.6.0
Non Patent Literature 2: 3GPP Contribution R1-2106213

### Summary of Invention

A communication apparatus according to a first aspect is a communication apparatus with communication capabilities reduced as compared to another communication apparatus. The communication apparatus comprises: a receiver configured to receive, from a base station, common configuration information which designates a designated bandwidth part number other than a bandwidth part number in which an initial bandwidth part used for the another communication apparatus is configured and configures a separate initial bandwidth part different from the initial bandwidth part via a system information block; and a controller configured to perform a random access procedure by using the separate initial bandwidth part.

Abase station according to a second aspect is a base station that performs communication with a communication apparatus with communication capabilities reduced as compared to another communication apparatus. The base station comprises: a transmitter configured to transmit common configuration information which designates a designated bandwidth part number other than a bandwidth part number in which an initial bandwidth part used for the another communication apparatus is configured and configures a separate initial bandwidth part different from the initial bandwidth part via a system information block; and a controller configured to perform a random access procedure with the communication apparatus by using the separate initial bandwidth part.

A communication method according to a third aspect is a communication method performed by a communication apparatus with communication capabilities reduced as compared to another communication apparatus. The communication method comprising the steps of: receiving, from a base station, common configuration information which designates a designated bandwidth part number other than a bandwidth part number in which an initial bandwidth part used for the another communication apparatus is configured and configures a separate initial bandwidth part different from the initial bandwidth part via a system information block; and performing a random access procedure by using the separate initial bandwidth part.

### Brief Description of Drawings

Objects, features, advantages, and the like of the present disclosure will become more apparent from the following detailed description with reference to the accompanying drawings.
Fig. 1 is a diagram illustrating a configuration of a mobile communication system according to an embodiment.
Fig. 2 is a diagram illustrating a configuration example of a protocol stack according to an embodiment.
Fig. 3 is a diagram for describing a method of configuring an initial BWP in a UE.
Fig. 4 is a diagram illustrating a configuration of a UE according to an embodiment.
Fig. 5 is a diagram illustrating a configuration of a base station according to the embodiment.
Fig. 6 is a sequence diagram illustrating an operation example of a mobile communication system according to an embodiment.
Fig. 7 is a diagram (1/2) for describing a frequency domain according to a first operation example of a mobile communication system according to an embodiment.
Fig. 8 is a diagram (2/2) for describing a frequency domain according to a first operation example of a mobile communication system according to an embodiment.
Fig. 9 is a diagram for describing a method of configuring an initial BWP in a UE in a mobile communication system according to an embodiment.
Fig. 10 is a diagram (1/3) for describing information elements of a mobile communication system according to an embodiment.
Fig. 11 is a diagram (2/3) for describing information elements of a mobile communication system according to an embodiment.
Fig. 12 is a diagram (3/3) for describing information elements of a mobile communication system according to an embodiment.
Fig. 13 is a diagram for describing a frequency domain according to a second operation example of a mobile communication system according to an embodiment.
Fig. 14 is a diagram for describing a frequency domain according to a third operation example of a mobile communication system according to an embodiment.
Fig. 15 is a diagram for describing a frequency domain according to a fourth operation example of a mobile communication system according to an embodiment.
Fig. 16 is a diagram for describing a frequency domain according to a fifth operation example of a mobile communication system according to an embodiment.
Fig. 17 is a diagram for describing a frequency domain according to a sixth operation example of a mobile communication system according to an embodiment.
Fig. 18 is a diagram (1/2) for describing information elements of a mobile communication system according to another embodiment.
Fig. 19 is a diagram (2/2) for describing information elements of a mobile communication system according to another embodiment.

### Description of Embodiments

A mobile communication system according to an embodiment will be described with reference to the drawings. In the description of the drawings, the same or similar parts are denoted by the same or similar reference numerals.

Since the RedCap UE can perform initial access in the initial bandwidth part used for the general communication apparatus, it is assumed that a bandwidth part (BWP #0) with a bandwidth part number of 0 is configured in the RedCap UE by common signaling, and then a separate initial bandwidth part is configured in the RedCap UE as a bandwidth part (that is, a designated bandwidth part with a bandwidth part number of 1 or larger) configured by RRC.

However, in the existing 3GPP technical specification, since the bandwidth part configured by RRC is configured by dedicated signaling, the RedCap UE can use the separate initial bandwidth part after initial access. Therefore, there is a problem in that it is difficult for the RedCap UE to use the separate initial bandwidth part to perform the random access procedure during initial access. Therefore, it is an object of the present disclosure to provide a communication apparatus, a base station, and a communication method, which are capable of using the separate initial bandwidth part during initial access in a case in which the initial bandwidth part is configured as the bandwidth part with the bandwidth part number of 0 by common signaling.

### (System Configuration)

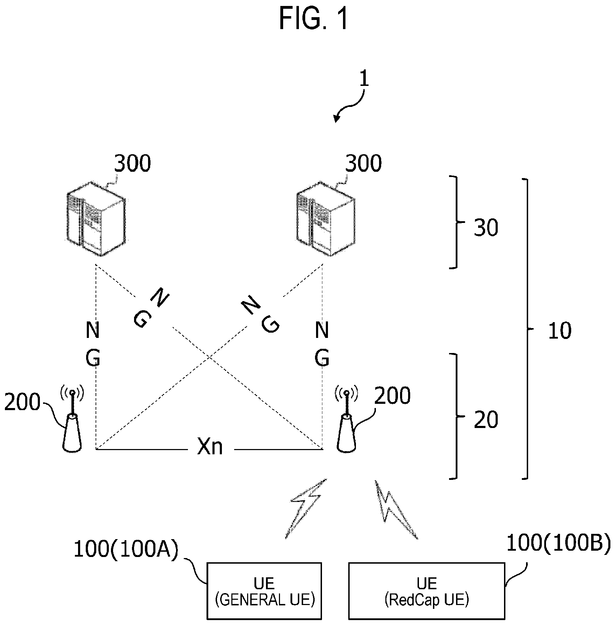

First, a configuration of a mobile communication system 1 according to the present embodiment will be described with reference to Fig. 1. The mobile communication system 1 is, for example, a system conforming to the 3GPP technical specification (TS). Hereinafter, a description will proceed with an example in which the 5th generation system (5G system) of the 3GPP standard, that is, a mobile communication system based on new radio (NR) is used as the mobile communication system 1.

The mobile communication system 1 includes a network 10 and a user equipment (UE) 100 that communicates with the network 10. The network 10 includes a next generation radio access network (NG-RAN) 20, which is a 5G radio access network, and a 5G core network (5GC) 30, which is a 5G core network.

The UE 100 is an example of a communication apparatus. The UE 100 may be a mobile radio communication apparatus. The UE 100 may be a communication apparatus that communicates via a base station 200. The UE 100 may be an apparatus used by a user. The UE 100 may be a user equipment specified in the 3GPP technical specification. The UE 100 is, for example, a mobile apparatus such as a mobile phone terminal such as a smartphone, a tablet terminal, a laptop PC, a communication module, or a communication card. The UE 100 may be a vehicle (for example, a car or a train) or an apparatus installed in a vehicle. The UE 100 may be a transport body other than a vehicle (for example, a ship or an airplane) or an apparatus installed in a transport body. The UE 100 may be a sensor or an apparatus installed in a sensor. It is noted that the UE 100 may be referred to as other names such as a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, or a remote unit.

In the present embodiment, two types of UEs including a general UE (general user equipment (general UE)) 100A and a RedCap UE (RedCap user equipment (RedCap UE)) 100B with communication capabilities reduced as compared with the general UE 100A are assumed as a NR UE 100. The general UE 100A has advanced communication capabilities such as a high speed and high capacity (enhanced mobile broadband (eMBB)) and ultra-reliable low latency communications (URLLC), which are characteristics of NR. Therefore, the general UE 100A has higher communication capabilities than the RedCap UE 100B. The general UE 100A may be referred to as a non-RedCap UE. The general UE 100A may be an existing UE, that is, a UE (a legacy UE) prior to Release 16.

The RedCap UE 100B is a UE with apparatus cost and complexity reduced as compared with the general UE 100A. The RedCap UE 100B is the UE 100 with the performance and price of the middle range for the IoT, and for example, configured to be narrower in the maximum bandwidth used for the radio communication or smaller in the number of receivers than that of the general UE 100A. Note that the receiver may be referred to as a reception branch. The RedCap UE 100B may be referred to as a reduced capability NR device. Hereinafter, for clarity of description, the general UE or the RedCap UE is also described, but the general UE or the RedCap UE in the present embodiment is a UE. That is, the general UE in the present embodiment may be replaced with a UE. In addition, the RedCap UE in the present embodiment may be replaced with a UE.

Specifically, the RedCap UE 100B may be able to communicate at a communication speed equal to or higher than a communication speed specified in the low power wide area (LPWA) standard, for example, Long Term Evolution UE Category (LTE Cat.) 1/1 bis, LTE Cat.M1 (LTE-M), and LTE Cat.NB1 (NB-IoT). The RedCap UE 100B may be capable of performing communication with a bandwidth equal to or larger than a bandwidth specified in the LPWA standard. The RedCap UE 100B may have a restricted bandwidth used for communication as compared with a UE of Rel-15 or Rel-16. For example, as a frequency range 1 (FR1), the maximum bandwidth (also referred to as a UE maximum bandwidth) supported by the RedCap UE 100B may be 20 MHz. In addition, as a frequency range 2 (FR2), the maximum bandwidth supported by the RedCap UE 100B may be 100 MHz. The RedCap UE 100B may have only one receiver that receives a radio signal. The RedCap UE 100B may be, for example, a wearable apparatus, a sensor apparatus, or the like.

The NG-RAN 20 includes a plurality of base stations 200. Each of the base stations 200 manages at least one cell. A cell forms a minimum unit of a communication area. One cell belongs to one frequency (carrier frequency). The term "cell" may represent a radio communication resource, and may also represent a communication object of the UE 100. Each of the base stations 200 can perform radio communication with the UE 100 existing in its own cell. The base station 200 communicates with the UE 100 by using a protocol stack of RAN. The details of the protocol stack will be described later. Further, the base station 200 is connected to other base stations 200 (which may also be referred to as neighboring base stations) via an Xn interface. The base station 200 communicates with the neighboring base stations via the Xn interface. In addition, the base station 200 provides NR user plane and control plane protocol terminations towards the UE 100 and is connected to a 5GC 30 via an NG interface. The base station 200 of NR may be referred to as a gNodeB (gNB).

The 5GC 30 includes a core network apparatus 300. The core network apparatus 300 includes, for example, an access and mobility management function (AMF) and/or a user plane function (UPF). The AMF performs mobility management of the UE 100. The UPF provides a function specialized for U-plane processing. The AMF and the UPF are connected to the base station 200 via the NG interface.

### (Configuration Example of Protocol Stack)

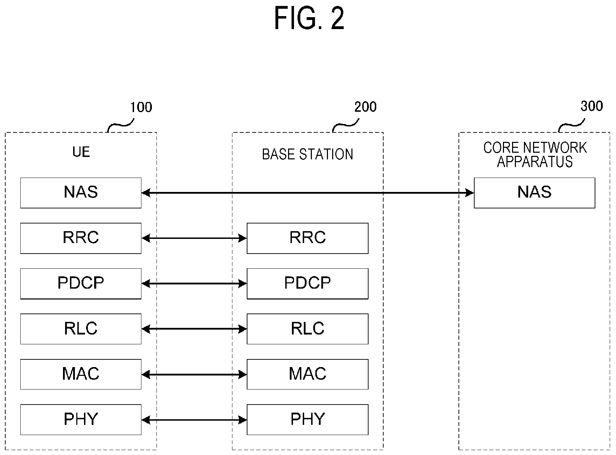

Next, a configuration example of the protocol stack according to the present embodiment will be described with reference to Fig. 2.

A protocol of a radio section between the UE 100 and the base station 200 includes a physical (PHY) layer, a medium access control (MAC) layer, a radio link control (RLC) layer, a packet data convergence protocol (PDCP) layer, and a radio resource control (RRC) layer.

The PHY layer performs encoding and decoding, modulation and demodulation, antenna mapping and demapping, and resource mapping and demapping. Data and control information are transmitted between the PHY layer of the UE 100 and the PHY layer of the base station 200 via a physical channel.

The MAC layer performs priority control of data, retransmission processing by hybrid automatic repeat request (hybrid ARQ (HARQ)), a random access procedure, and the like. Data and control information are transmitted between the MAC layer of the UE 100 and the MAC layer of the base station 200 via a transport channel. The MAC layer of the base station 200 includes a scheduler. The scheduler determines uplink and downlink transport formats (transport block size and modulation and coding scheme (MCS)) and resources to be allocated to the UE 100.

The RLC layer transmits data to the RLC layer on a reception side by using the features of the MAC layer and the PHY layer. Data and control information are transmitted between the RLC layer of the UE 100 and the RLC layer of the base station 200 via a logical channel.

The PDCP layer performs header compression and decompression and encryption and decryption.

A service data adaptation protocol (SDAP) layer may be provided as an upper layer of the PDCP layer. The service data adaptation protocol (SDAP) layer performs mapping between an IP flow that is a unit in which a core network performs quality of service (QoS) control, and a radio bearer that is a unit in which an access stratum (AS) performs QoS control.

The RRC layer controls the logical channel, the transport channel, and the physical channel in response to establishment, reestablishment, and release of the radio bearer. RRC signaling for various configurations is transmitted between the RRC layer of the UE 100 and the RRC layer of the base station 200. In a case in which there is an RRC connection between the RRC of the UE 100 and the RRC of the base station 200, the UE 100 is in an RRC connected state. In a case in which there is no RRC connection between the RRC of the UE 100 and the RRC of the base station 200, the UE 100 is in an RRC idle state. In a case in which an RRC connection between the RRC of the UE 100 and the RRC of the base station 200 is suspended, the UE 100 is in an RRC inactive state.

An NAS layer located above the RRC layer in the UE 100 performs session management and mobility management of the UE 100. NAS signaling is transmitted between the NAS layer of the UE 100 and the NAS layer of the core network apparatus 300.

Note that the UE 100 has an application layer and the like in addition to the radio interface protocol.

### (Radio Frame Configuration)

In the 5G system, downlink transmission and uplink transmission are configured in a radio frame of 10 ms connection duration. For example, the radio frame includes 10 subframes. For example, one subframe may be 1 ms. Furthermore, one subframe may include one or more slots. For example, the number of symbols forming one slot is normally 14 for a cyclic prefix (CP) and 12 for an extended CP. In addition, the number of slots forming one subframe varies depending on configured subcarrier spacing. For example, for the normal CP, the number of slots per subframe is 1 (that is, 14 symbols) in a case in which 15 kHz is configured as the subcarrier spacing, the number of slots per subframe is 2 (that is, 28 symbols) in a case in which 30 kHz is configured as the subcarrier spacing, the number of slots per subframe is 4 (that is, 56 symbols) in a case in which 60 kHz is configured as the subcarrier spacing, and the number of slots per subframe is 8 (that is, 128 symbols) in a case in which 120 kHz is configured as the subcarrier spacing. In addition, for the extended CP, the number of slots per subframe is 4 (that is, 48 symbols) in a case in which 60 kHz is configured as the subcarrier spacing. That is, the number of slots forming one subframe is determined on the basis of the subcarrier spacing configured by the base station 200. In addition, the number of symbols forming one subframe is determined on the basis of the subcarrier spacing configured by the base station 200. That is, on the basis of the subcarrier spacing configured by the base station 200, the number of symbols forming the subframe of 1 ms is determined, and the length (the length in a time direction) of each symbol changes.

### (Bandwidth Part)

The UE 100 and the base station 200 perform communication by using a bandwidth part (BWP) that is a subset of a total bandwidth of a cell. Specifically, the base station 200 configures one or more BWPs in the UE 100. The base station 200 can notify the UE 100 of a BWP (that is, an active BWP) used for communication with the base station 200 among the configured one or more BWPs. Specifically, the base station 200 can transmit, to the UE 100, an identifier indicating a BWP to be activated at the time of performing the configuration, that is, a BWP to be first used in communication with the base station 200. Furthermore, for control of switching (so-called BWP switching) from the active BWP to a BWP that is not the active BWP (hereinafter, an inactive BWP) and switching from the inactive BWP to the active BWP, for example, a physical downlink control channel (for example, downlink assignment and uplink assignment), a timer (that is, bwp-InactivityTimer), RRC signaling, a MAC entity, or the like is used.

Here, the communication in the BWP (that is, the active BWP) may include at least one of transmission via an uplink-shared channel (UL-SCH) in the BWP, transmission via a random access channel (RACH) in the BWP (in a case in which a physical random access channel (Physical RACH (PRACH)) occasion is configured), monitoring of a physical downlink control channel (PDCCH) in the BWP, transmission via a physical uplink control channel (PUCCH) in the BWP (in a case in which PUCCH resources are configured), report of channel state information (CSI) for the BWP, and reception of a downlink-shared channel (DL-SCH) in the BWP.

Here, the UL-SCH is a transport channel and is mapped to a physical uplink shared channel (PUSCH) which is a physical channel. Data transmitted via the UL-SCH is also referred to as UL-SCH data. For example, it may be equivalent to UL-SCH data and uplink user data. Further, the DL-SCH is a transport channel and is mapped to a physical downlink shared channel (PDSCH) which is a physical channel. Data transmitted via the DL-SCH is also referred to as DL-SCH data. For example, it may be equivalent to DL-SCH data and downlink user data.

In addition, the PUCCH is used to transmit uplink control information. For example, the uplink control information includes a hybrid automatic repeat request (HARQ-ACK), CSI, and/or a scheduling request (SR). The HARQ-ACK includes a positive acknowledgment or a negative acknowledgment. For example, the PUCCH is used to transmit the HARQ-ACK for the PDSCH (that is, the DL-SCH (DL-SCH data and downlink user data)). Here, the DL-SCH data and/or the downlink user data are also referred to as a downlink transport block.

The BWP includes an initial bandwidth part (initial BWP) and a bandwidth part (dedicated BWP) dedicated to each UE 100. The initial BWP is used at least for initial access of the UE 100. The initial BWP is commonly used by a plurality of UEs 100. For example, the initial BWP is configured by using a parameter (cell-specific parameter) common to a plurality of UEs 100. The initial BWP includes an initial BWP for downlink communication (hereinafter, the initial downlink BWP (initial DL BWP)) and an initial BWP for uplink communication (hereinafter, the initial uplink BWP (initial UL BWP)). For example, values of identifiers (that is, bwp-id) indicating the initial downlink BWP and the initial uplink BWP may be 0.

The UE 100 can specify (configure) the initial BWP (that is, the initial downlink BWP and the initial uplink BWP), for example, by two methods. In the first method, the UE 100 specifies the initial BWP on the basis of CORESET #0 configured using information included in a master information block (MIB) in a physical broadcast channel (PBCH). In the second method, the UE 100 specifies the initial BWP on the basis of a location and a bandwidth in a frequency domain configured using information included in a system information block (SIB). For example, the UE 100 may apply the BWP specified by the first method to communication with the base station 200 until reception of a message 4 (MSG4) in the random access procedure. For example, after the message 4 is received, the UE 100 may apply the BWP specified by the second method to communication with the base station 200. Here, the message 4 in the random access procedure may include an RRC setup message, an RRC resume message, and/or an RRC (re)establishment message.

The dedicated BWP is dedicated to the UE 100. The dedicated BWP includes a dedicated BWP for downlink communication (hereinafter, a dedicated downlink BWP (UE dedicated DL BWP)) and a dedicated BWP for uplink communication (hereinafter, a dedicated uplink BWP (UE dedicated UL BWP)). For example, values of identifiers indicating the dedicated downlink BWP and the dedicated uplink BWP may be other than 0.

In the UE 100, for example, the dedicated BWP is configured on the basis of information (for example, information for the downlink BWP (that is, BWP-Downlink) and information for the uplink BWP (that is, BWP-Uplink)), which are included in the RRC message. Each of the dedicated downlink BWP information and the dedicated uplink BWP information may include, for example, at least one of information (for example, locationAndBadwidth) indicating a location and a bandwidth in the frequency domain, information (for example, subcarrierSpacing) indicating subcarrier spacing, and information (for example, cyclicPrefix) indicating an extended cyclic prefix.

The UE 100 can monitor the PDCCH nu using the configured BWP. Monitoring of the PDCCH may mean monitoring, in accordance with an associated search space set, a set of PDCCH candidates in one or more control resource sets (CORESET(s)) in a DL BWP (for example, an activated DL BWP) in a serving cell (for example, the activated serving cell) in which monitoring of the PDCCH is configured. Monitoring of the PDCCH may include decoding each of the PDCCH candidates in accordance with a downlink control information (DCI) format being monitored.

Further, the UE 100 may monitor the DCI format to which a cyclic redundancy check (also referred to as CRC parity bit) scrambled by a radio network temporary identifier (RNTI) configured by the base station 200 is added. Here, the RNTI may include a system information-RNTI (SI-RNTI), a random access RNTI (RA-RNTI), a temporary C-RNTI (TC-RNTI), a paging RNTI (P-RNTI), and/or a cell-RNTI (C-RNTI).

The set of PDCCH candidates monitored by the UE 100 may be specified as a search space set of the PDCCH. The search space set may include a common search space set (CSS set(s)) and/or a UE specific search space set (USS set(s)). Therefore, the base station 200 may configure the CORESET and/or the search space set in the UE 100, and the UE 100 may monitor the PDCCH in the configured CORESET and/or the search space set. For example, the UE 100 may monitor the PDCCH candidates in at least one search space set of a Type 0-PDCCH CSS set (Type 1-PDCCH CSS set), a Type 1-PDCCH CSS set (Type 2-PDCCH CSS set), a Type 2-PDCCH CSS set (Type 3-PDCCH CSS set), and a USS set.

The Type 0-PDCCH CSS set is configured in the UE 100 by pdcch-ConfigSIB 1 in the master information block (MIB), searchSpaceSIB 1 in PDCCH-ConfigCommon, or searchSpaceZero in PDCCH-ConfigCommon for the DCI format to which the CRC scrambled by SI-RNTI is added. The Type 1-PDCCH CSS set is configured in the UE 100 by ra-SearchSpace in PDCCH-ConfigCommon for the DCI format to which CRC scrambled by the RA-RNTI or the TC-RNTI is added. The Type 2-PDCCH CSS set is configured in the UE 100 by pagingSearchSpace in PDCCH-ConfigCommon for the DCI format to which the CRC scrambled by the P-RNTI is added. The USS set is configured in the UE 100 by SearchSpace in PDCCH-Config in which searchSpaceType for the DCI format to which the CRC scrambled by the C-RNTI is added is ue-Specific.

Execution of SI (system information) transmission and reception may include configuring an associated CORESET and/or search space set (for example, Type 1-PDCCH CSS set) in the UE 100. Further, execution of SI transmission and reception may include monitoring the PDCCH (which may be the DCI format to which the CRC scrambled by the SI-RNTI is added) in an associated CORESET and/or search space set (Type 1-PDCCH CSS set).

Execution of the random access (RA) procedure may include configuring an associated CORESET and/or search space set (for example, Type 1-PDCCH CSS set) in the UE 100. Further, performance of the RA procedure may include monitoring the PDCCH (which may be the DCI format to which CRC scrambled by the RA-RNTI and/or the TC-RNTI is added) in an associated CORESET and/or search space set (Type 1-PDCCH CSS set).

Execution of paging may include configuring an associated CORESET and/or search space set (for example, Type 2-PDCCH CSS set) in the UE 100. Further, execution of paging may include monitoring the PDCCH (which may be the DCI format to which the CRC scrambled by the P-RNTI is added) in an associated CORESET and/or search space set (Type 2-PDCCH CSS set).

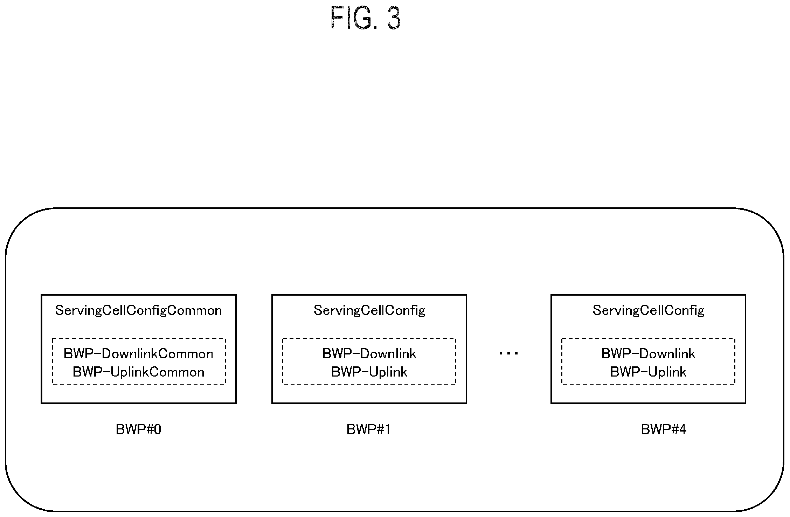

Meanwhile, in the 3GPP technical specification, a method of configuring the initial BWP by common signaling rather than dedicated signaling is specified as a method of configuring the initial BWP in the UE 100. According to this method, the initial BWP configured by common signaling is configured in the UE 100 as the BWP with the BWP number of 0 (specifically, BWP #0). As illustrated in Fig. 3, the initial BWP (BWP #0) is configured by BWP-DownlinkCommon and BWP-UplinkCommon in ServingCellConfigCommon, but is not configured by BWP-DownlinkDedicated or BWP-UplinkDedicated in ServingCellConfig. BWP #0 is not regarded as a BWP configured by radio resource control (RRC). On the other hand, BWPs (BWP #1 to BWP # 4) with the BWP numbers of 1 and larger are BWPs (dedicated BWPs) configured by dedicated signaling and are BWPs configured by RRC.

In recent years, in introducing into the RedCap UE 100B in the mobile communication system 1 of 3GPP, it has been agreed to configure the initial BWP for the RedCap UE 100B, that is, the initial BWP (hereinafter, referred to as the separate initial BWP as appropriate) with a bandwidth narrower than that of the initial BWP for the general UE 100A, independently of the initial BWP for the general UE 100A.

Here, since the RedCap UE 100B can execute the initial access in the initial BWP used for the general UE 100A, it is expected that the BWP with the BWP number 0 (BWP #0) is configured in the RedCap UE by common signaling, and then the separate initial BWP is configured in the RedCap UE 100B as the BWP (that is, a designated BWP with a BWP number of 1 or larger) configured by RRC.

However, in the existing 3GPP technical specification, since the BWP configured by RRC is configured by dedicated signaling, the RedCap UE 100B can use the separate initial BWP after initial access. Therefore, there is a problem in that it is difficult for the RedCap UE 100B to use the separate initial BWP to perform the random access procedure during initial access. In an embodiment to be described later, an operation for enabling the separate initial BWP to be used during the initial access in a case where the initial BWP is configured as the BWP with the BWP number of 0 by common signaling will be described.

### (Configuration of User Equipment)

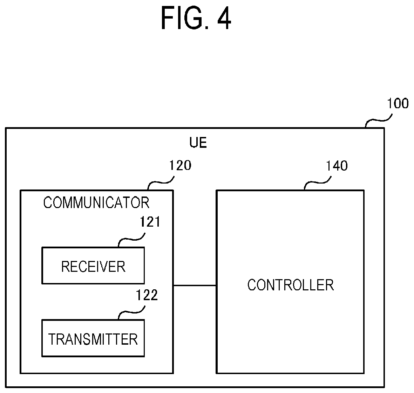

Next, a configuration of the UE 100 according to the present embodiment will be described with reference to Fig. 4. The UE 100 includes a communicator 120 and a controller 140.

The communicator 120 performs radio communication with the base station 200 by transmitting and receiving a radio signal to and from the base station 200. The communicator 120 includes at least one receiver 121 and at least one transmitter 122. The receiver 121 and the transmitter 122 may be configured to include an antenna and an RF circuit. The antenna converts a signal into a radio wave and emits the radio wave into space. Further, the antenna receives a radio wave in space and converts the radio wave into a signal. The RF circuit performs analog processing of a signal transmitted and received via the antenna. The RF circuit may include a high frequency filter, an amplifier, a modulator, a low pass filter, and the like.

The receiver 121 may be referred to as a receiver (RX). The transmitter 122 may be referred to as a transmitter (TX). In a case in which the UE 100 is the general UE 100A, the number of receivers included in the communicator 120 may be two to four. In a case in which the UE 100 is the RedCap UE 100B, the number of receivers included in the communicator 120 may be one or two.

The controller 140 performs various types of control in the UE 100. The controller 140 controls communication with the base station 200 via the communicator 120. An operation of the UE 100 to be described later may be an operation performed under the control of the controller 140. The controller 140 may include at least one processor capable of executing a program and a memory that stores the program. The processor may execute the program to perform the operation of the controller 140. The controller 140 may include a digital signal processor that performs digital processing on a signal transmitted and received via the antenna and the RF circuit. The digital processing includes processing of the protocol stack of the RAN. Further, the memory stores a program executed by the processor, parameters related to the program, and data related to the program. The memory may include at least one of a read only memory (ROM), an erasable programmable read only memory (EPROM), an electrically erasable programmable read only memory (EEPROM), a random access memory (RAM), and a flash memory. All or part of the memory may be included in the processor.

In the UE 100 (RedCap UE 100B) of the above described configuration having the communication capabilities reduced as compared with the general UE 100A, the receiver 121 designates a designated BWP number rather than a BWP number in which the initial BWP used for the general UE 100A is configured, and receives, from the base station 200, common configuration information configuring the separate initial BWP different from the initial BWP via the SIB. The controller 140 performs the random access procedure using the separate initial BWP. Accordingly, even in a case in which BWP #0 used for the general UE 100A is configured in the RedCap UE 100B by common signaling, it is possible to configure the separate initial BWP, as a BWP with a designated BWP number, in the RedCap UE 100B on the basis of the common configuration information received via the system information block. As a result, the RedCap UE 100B can use the separate initial BWP during the initial access.

Note that the operations of the operators (specifically, at least one of the communicator 120 and the controller 140) included in the UE 100 may be described as the operations of the UE 100.

### (Configuration of Base Station)

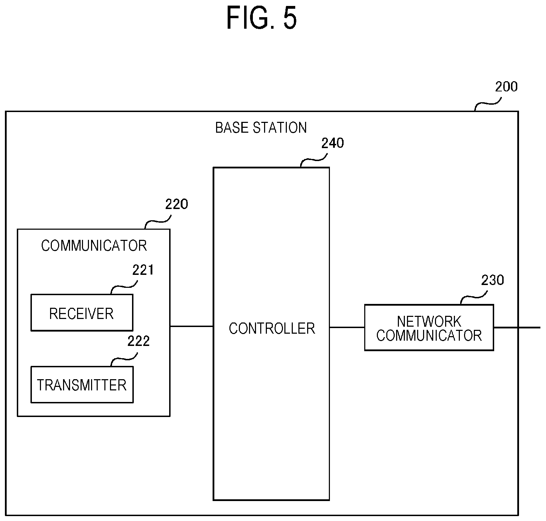

Next, a configuration of the base station 200 according to the present embodiment will be described with reference to Fig. 5. The base station 200 includes a radio communicator 220, a network communicator 230, and a controller 240.

The radio communicator 220 performs communication with the UE 100 via the antenna under the control of the controller 240. The radio communicator 220 includes a receiver 221 and a transmitter 222. The receiver 221 converts a radio signal received by the antenna into a received signal that is a baseband signal, performs signal processing on the received signal, and outputs the resulting signal to the controller 240. The transmitter 222 performs signal processing on a transmission signal that is a baseband signal output from the controller 240, converts the transmission signal into a radio signal, and transmits the radio signal from the antenna.

The network communicator 230 transmits and receives signals to and from the network. The network communicator 230 receives a signal from a neighboring base station connected via the Xn interface which is an interface between base stations, for example, and transmits the signal to the neighboring base station. Further, the network communicator 230 receives a signal from the core network apparatus 300 connected via the NG interface, for example, and transmits the signal to the core network apparatus 300.

The controller 240 performs various types of control in the base station 200. The controller 240 controls, for example, communication with the UE 100 via the radio communicator 220. Further, the controller 240 controls, for example, communication with a node (for example, the neighboring base station and the core network apparatus 300) via the network communicator 230. An operation of the base station 200 to be described later may be an operation performed under the control of the controller 240.

The controller 240 may include at least one processor capable of executing a program and a memory that stores the program. The processor may execute the program to perform the operation of the controller 240. The controller 240 may include a digital signal processor that performs digital processing on a signal transmitted and received via the antenna and the RF circuit. The digital processing includes processing of the protocol stack of the RAN. Further, the memory stores a program executed by the processor, parameters related to the program, and data related to the program. All or part of the memory may be included in the processor.

The base station 200 configured in this manner communicates with the UE 100 (RedCap UE 100B) with communication capabilities reduced as compared with the general UE 100A. In the base station 200, the transmitter 222 designates a designated BWP number rather than a BWP number in which the initial BWP used for the general UE 100A is configured, and transmits the common configuration information configuring a separate initial BWP different from the initial BWP via the SIB. The controller 240 performs the random access procedure with the RedCap UE 100B by using the separate initial BWP. Accordingly, even in a case in which BWP #0 used for the general UE 100A is configured in the RedCap UE 100B by common signaling, it is possible to configure the separate initial BWP, as a BWP with a designated BWP number, in the RedCap UE 100B on the basis of the common configuration information received via the system information block. As a result, the RedCap UE 100B can use the separate initial BWP during the initial access.

Note that the operations of the operator (specifically, at least one of the radio communicator 220 (the receiver 221 and/or the transmitter 222), the network communicator 230, and the controller 240) included in the base station 200 may be described as the operations of the base station 200.

### (System Operation)

### (1) First Operation Example

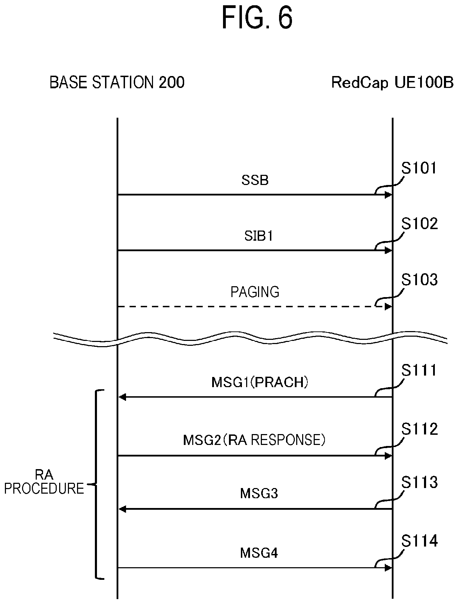

A first operation example of the mobile communication system 1 will be described with reference to Figs. 6 to 12. In the initial state of Fig. 6, the RedCap UE 100B may be in the RRC idle state or the RRC inactive state between the RedCap UE 100B and the base station 200 (cell).

### Step S101:

The base station 200 (the transmitter 222) transmits a synchronization signal and physical broadcast channel block (hereinafter, SSB). RedCap UE 100B (receiver 121) receives the SSB from base station 200.

The SSB includes 4 orthogonal frequency division multiplexing (OFDM) symbols in the time domain, and includes 240 consecutive subcarriers in the frequency domain. The SSB includes a primary synchronization signal (hereinafter, a PSS), a secondary synchronization signal (hereinafter, an SSS), and a physical broadcast channel (PBCH). Each of the PSS and the SSS occupies 1 OFDM symbols and 127 subcarriers. The PBCH spans 3 OFDM symbols and 240 subcarriers. A location of a resource element to which the SSB is mapped is specified in the specification.

The PBCH carries the master information block (MIB). The MIB includes a common control resource set (CORESET), an information element (pdcch-ConfigSIB1) that determines a common search space and a necessary PDCCH. pdcch-ConfigSIB 1 includes an information element (controlResourceSetZero) used to configure the CORESET #0 of the initial BWP. controlResourceSetZero is indicated by an integer value of 0 to 15.

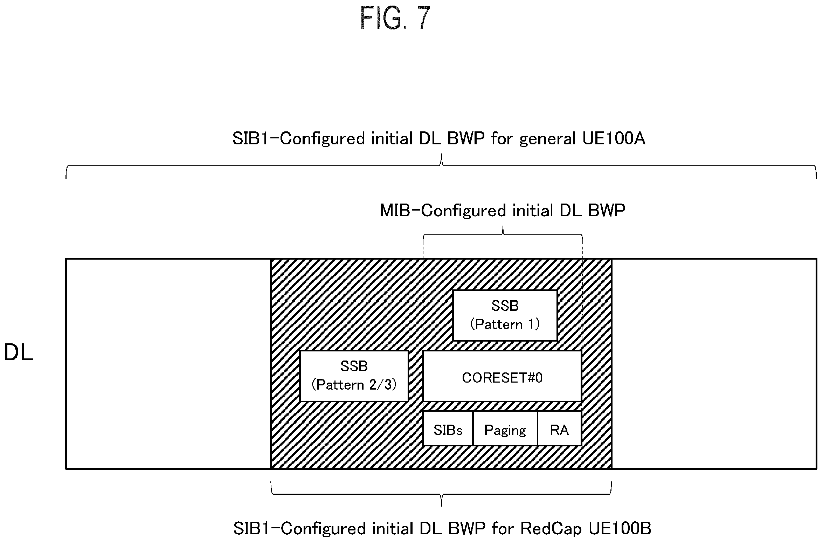

As illustrated in Fig. 7, the base station 200 transmits a plurality of SSBs at different frequencies. In the present operation example, a plurality of SSBs are located within the initial BWP (SIB 1-configured initial DL BWP for general UE 100A) used for the general UE 100A configured by the system information block type 1 (SIB1) and within the initial BWP (SIB 1-Configured initial DL BWP for RedCap UE 100B) for the RedCap UE 100B configured by the SIB 1. Among the plurality of SSBs, an SSB (Pattern 1) is located within an initial BWP (MIB-configured initial DL BWP) configured on the basis of the MIB1, and an SSB (Pattern 2/3) is located outside the initial BWP configured on the basis of the MIB1.

The RedCap UE 100B (the controller 140) can receive (that is, detect) the SSB transmitted from the base station 200 and synchronize the time and/or the frequency.

In addition, the RedCap UE 100B (the controller 140) acquires the MIB by receiving the SSB. The RedCap UE 100B (the controller 140) configures the initial BWP on the basis of the CORESET #0 configured on the basis of the MIB. The initial BWP (initial downlink BWP) configured on the basis of the CORESET #0 may be referred to as "MIB Configured Initial DL BWP" or "Initial DL BWP derived by MIB." Hereinafter, the initial BWP may be referred to as an MIB initial BWP. The RedCap UE 100B (the controller 140) specifies the Type 0-PDCCH CSS set (for example, the bandwidth (24, 48, or 96 RB)) on the basis of, for example, a configuration value indicated by controlResourceSetZero in the MIB. Accordingly, the Type 0-PDCCH CSS set is configured in the RedCap UE 100B (the controller 140). The RedCap UE 100B (the controller 140) monitors the system information block (specifically, the SIB 1) in the Type 0-PDCCH CSS set by using the MIB initial BWP.

### Step S102:

The base station 200 (the transmitter 222) transmits the SIB 1. The RedCap UE 100B (the receiver 121) receives the SIB 1 from the base station 200. In this operation example, the SIB1 is transmitted in "SIBs" in Fig. 7. Therefore, the SIB1 is located in the MIB initial BWP. Further, in addition to the SIB1, other SIBs may be transmitted in an area indicated by the SIBs.

The SIB 1 includes first common configuration information (for example, a parameter (locationAndBadwidth) indicating a frequency location and/or a bandwidth) for configuring the initial BWP used for the general UE 100A (the initial BWP for the general UE 100A). Specifically, the SIB1 includes an information element (ServingCellConfigCommonSIB) used to configure a cell-specific parameter for a cell (serving cell) of the UE. ServingCellConfigCommonSIB includes, as the first common configuration information, an information element (BWP-DownlinkCommon) used to configure a common parameter of the downlink BWP and an information element (BWP-UplinkCommon) used to configure a common parameter of the uplink BWP.

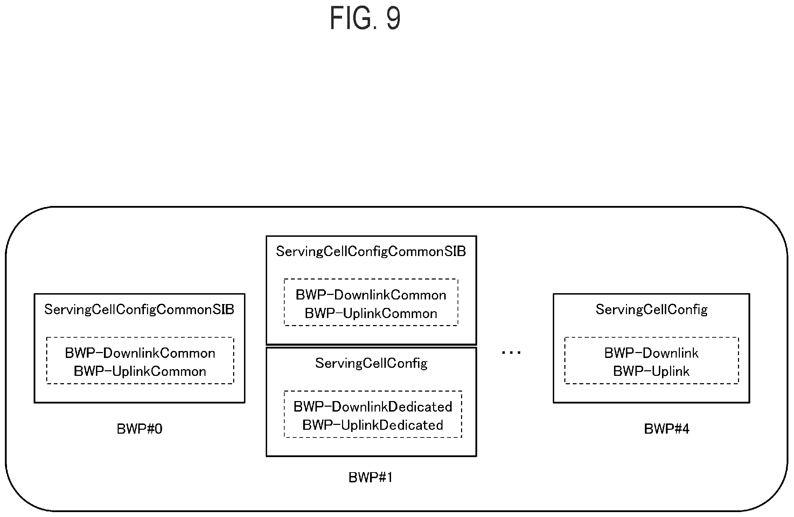

The UE 100 (the controller 140) configures the initial BWP on the basis of BWP-DownlinkCommon and BWP-UplinkCommon in ServingCellConfigCommonSIB. As illustrated in Fig. 9, the initial BWP is the initial BWP for the general UE 100A, and is configured as the BWP (BWP #0) with the BWP number of 0. The BWP #0 is the initial BWP for the general UE 100A, but can be used by the RedCap UE 100B. That is, the initial BWP for the general UE 100A may be the initial BWP that can be shared by the general UE 100A and the RedCap UE 100B. As described above, in the UE 100 (the controller 140), the initial BWP for the general UE 100A is configured as the BWP (BWP #0) with the BWP number of 0 by the common signaling.

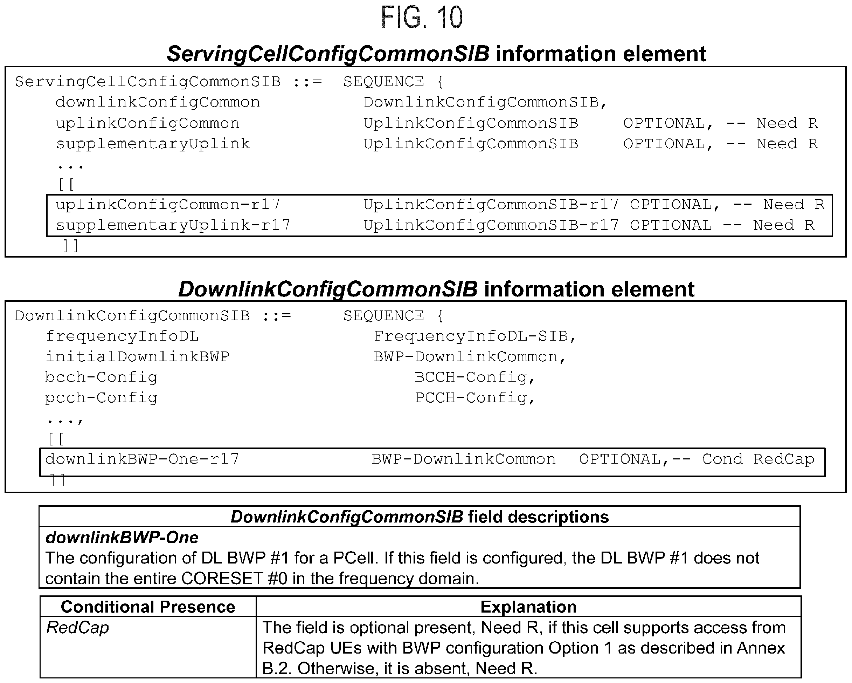

In addition, the SIB 1 includes second common configuration information for configuring a separate initial BWP different from the initial BWP used for the general UE 100A. Specifically, the SIB1 includes an information element (ServingCellConfigCommonSIB) used to configure a cell-specific parameter for a cell (serving cell) of the UE. As illustrated in Fig. 10, ServingCellConfigCommonSIB includes an information element (DownlinkConfigCommonSIB) that provides a common downlink parameter of the cell. DownlinkConfigCommonSIB includes second common configuration information for designating a designated BWP number (specifically, the BWP number 1) other than the BWP number 0 and configuring a separate initial BWP different from the initial BWP for the general UE 100A. Specifically, DownlinkConfigCommonSIB includes, as the second common configuration information, an information element (downlinkBWP-One-r17: BWP-DownlinkCommon) indicating a configuration of the downlink BWP #1 for the primary cell (PCell). In a case in which a field of downlinkBWP-One-r17 is configured, the downlink BWP #1 may not include the entire CORESET #0 in the frequency domain. In the present operation example, the downlink BWP #1 includes the entire CORESET #0 in the frequency domain. The field of downlinkBWP-One-r17 may optionally be present in a case in which access from the RedCap UE according to the method (So-called BWP configuration option 1 described in Appendix B.2.) of configuring the initial BWP by common signaling rather than dedicated signaling is supported as the method of configuring the initial BWP for the RedCap UE 100B. Otherwise, the field may not be present.

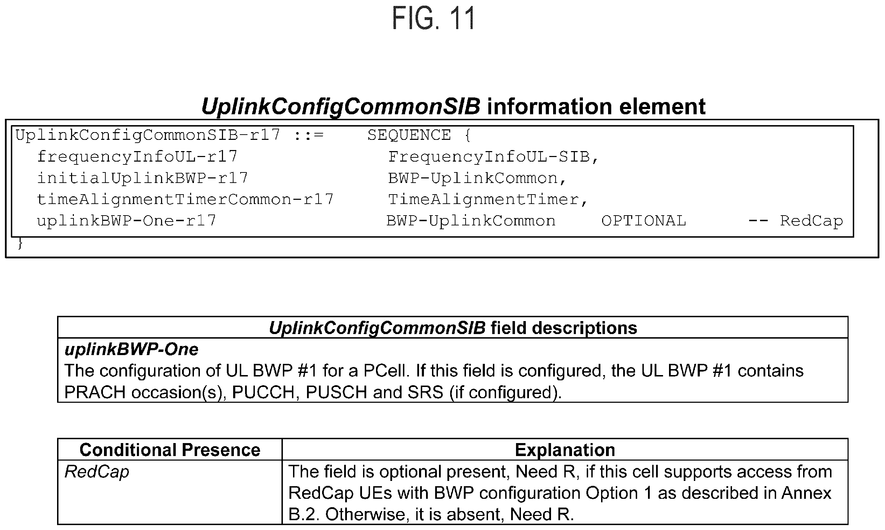

In addition, as illustrated in Fig. 10, ServingCellConfigCommonSIB includes an information element (uplinkConfigCommon-r17 and supplementaryUplinkConfig-r17) for configuring the separate initial uplink BWP as the second common configuration information. UplinkConfigCommon-r17 indicates a configuration of the separate initial BWP for a normal uplink, and supplementaryUplinkConfig-r17 indicates a configuration of the separate initial BWP for an additional uplink. Each of uplinkConfigCommon-r17 and supplementaryUplinkConfig-r17 indicates the configuration of the separate initial uplink BWP according to an information element (UplinkConfigCommonSIB-r17) that provides the common uplink parameter of the cell. As illustrated in Fig. 11, UplinkConfigCommon-r17 may include an information element (frequencyInfoUL-r17) indicating an absolute uplink frequency configuration and a subcarrier-specific virtual carrier, an information element (initialUplinkBWP-r17) indicating an initial uplink BWP configuration for a serving cell, (timeAlignmentTimerCommon-r17) indicating a time alignment timer, and an information element (uplinkBWP-One-r17) indicating a configuration of the uplink BWP #1 for the primary cell. In a case in which the field of uplinkBWP-One-r17 is configured, the uplink BWP #1 may include a PRACH occasion, a PUCCH, a PUSCH, and an SRS. The field of uplinkBWP-One-r17 may optionally be present in a case in which access from the RedCap UE according to the BWP configuration option 1 as described in Appendix B.2. is supported as described above. Otherwise, the field may not be present.

As described above, the base station 200 (the transmitter 222) transmits the second common configuration information for configuring the separate initial BWP (BWP #1) via the SIB 1. The RedCap UE 100B (the controller 140) configures the initial BWP on the basis of downlinkBWP-One-r17 and uplinkBWP-One-r17 in ServingCellConfigCommonSIB. As illustrated in Fig. 9, the initial BWP is configured as the BWP (BWP #1) with the BWP number of 1. In a case of the RRC idle state or the RRC inactive state, the RedCap UE 100B (the controller 140) uses the BWP #1 based on this configuration.

### Step S103:

The base station 200 and the RedCap UE 100B may execute paging. The base station 200 (the transmitter 222) transmits the PDCCH (DCI format (paging DCI) to which CRC scrambled by P-RNTI is added) in the associated CORESET and/or search space set (Type 2-PDCCH CSS set). The base station 200 (the transmitter 222) may transmit the paging DCI by using the separate initial BWP or may transmit the paging DCI by using the MIB initial BWP.

As illustrated in Fig. 7, in the present operation example, the paging DCI is transmitted in an area (specifically, an area indicated by "Paging") located in the separate initial BWP and the MIB initial BWP. The paging DCI may include scheduling information indicating scheduling of the PDSCH for transmitting the paging message. The base station 200 (the transmitter 222) may transmit the paging message in accordance with scheduling indicated by the scheduling information.

The RedCap UE 100B (the receiver 121) may monitor paging, as execution of paging, by using the separate initial BWP (BWP #1). The RedCap UE 100B (the receiver 121) may monitor the PDCCH (paging DCI) in the Type 2-PDCCH CSS set in the separate initial BWP (BWP #1). The RedCap UE 100B (the receiver 121) may receive the paging message on the basis of the scheduling information included in the paging DCI. The RedCap UE 100B (the controller 140) determines whether or not its own specific identifier is included in the paging message. In a case in which its own identifier is included in the paging message, of the RedCap UE 100B (the controller 140) may determine that it is paged and perform an operation of transitioning to the RRC connected state.

Thereafter, the description will proceed, assuming that the random access (RA) procedure is performed between the RedCap UE 100B and the base station 200. In the present operation example, the RedCap UE 100B and the base station 200 perform the random access procedure by using the separate initial BWP.

### Step S111:

The RedCap UE 100B (the transmitter 122) transmits the message 1 (hereinafter, MSG1) to the base station 200 by using the separate initial BWP. The RedCap UE 100B (the transmitter 122) transmits the MSG 1 including the random access (RA) preamble via the physical random access channel (PRACH) in the separate initial BWP. The base station 200 (the receiver 221) receives the MSG 1 from the RedCap UE 100B.

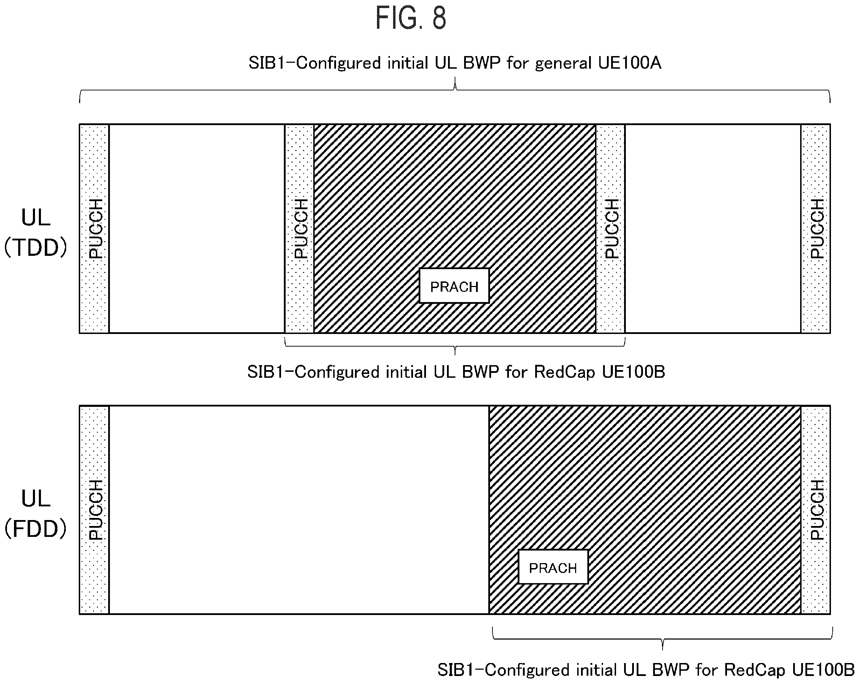

As illustrated in Fig. 8, the PRACH is transmitted in the separate initial BWP (SIB 1-Configured initial UL BWP for RedCap UE 100B). Further, in a case in which the communication scheme is the time division duplex (TDD) scheme, the center frequency of the separate initial uplink BWP is identical to the center frequency of the separate initial downlink BWP. In a case in which the communication scheme is the frequency division duplex (FDD) scheme, the separate initial uplink BWP may be arranged at one end of the initial uplink BWP for the general UE 100 A in the frequency direction. Accordingly, the initial uplink BWP for the general UE 100A is not divided by the separate initial uplink BWP in the frequency direction. As a result, a wide resource area can be secured as the initial uplink BWP for the general UE 100A, and the time-frequency resources can be effectively used.

The RedCap UE 100B (the transmitter 122) may determine whether or not the frequency band of the separate initial BWP includes the frequency band of the MIB initial BWP. In a case in which the frequency band of the separate initial BWP includes the frequency band of the MIB initial BWP, the RedCap UE 100B (the transmitter 122) may perform the random access procedure by using the separate initial BWP or the MIB initial BWP. That is, the RedCap UE 100B (the transmitter 122) may transmit the MSG 1 by using the separate initial BWP or the MIB initial BWP. On the other hand, in a case in which the frequency band of the separate initial BWP does not deny the frequency band of the MIB initial BWP, the RedCap UE 100B (the transmitter 122) may perform the random access procedure by using the separate initial BWP. That is, the RedCap UE 100B (the transmitter 122) may transmit the MSG 1 using the separate initial BWP without using the MIB initial BWP.

### Step S112:

The base station 200 (the transmitter 222) transmits a message 2 (hereinafter, MSG2) to the RedCap UE 100B. The MSG2 is a random access (RA) response. The RedCap UE 100B (the receiver 121) receives the MSG 2 from the base station 200. As illustrated in Fig. 7, the MSG2 is located in an area (specifically, an area indicated by "RA") located in the separate initial BWP and the MIB initial BWP.

The MSG 2 includes, for example, preamble information indicating the RA preamble received from the RedCap UE 100B, an uplink grant (UL grant) indicating the time-frequency resources used for the UE 100 to transmit the message 3, and the like. The time-frequency resources may be located at a frequency in the separate initial BWP.

The RedCap UE 100B (the controller 140) that has received the RA response performs the process of step S113 in a case in which the RA preamble transmitted by itself coincides with the RA preamble indicated by the preamble information received from the base station 200 in step S102.

### Step S113:

The RedCap UE 100B (the transmitter 122) transmits a message 3 (hereinafter, MSG3) to the base station 200. The RedCap UE 100B (the transmitter 122) transmits the MSG 3 to the base station 200 in the time-frequency resources allocated by the uplink grant. The base station 200 (the receiver 221) receives the MSG 3 from the RedCap UE 100B.

### Step S114:

The base station 200 (the transmitter 222) transmits a message 4 (hereinafter, MSG4) to the RedCap UE 100B. The base station 200 (the transmitter 222) transmits the MSG 4 by using the separate initial BWP. The RedCap UE 100B (the receiver 121) receives the MSG 4 from the base station 200 by using the separate initial BWP.

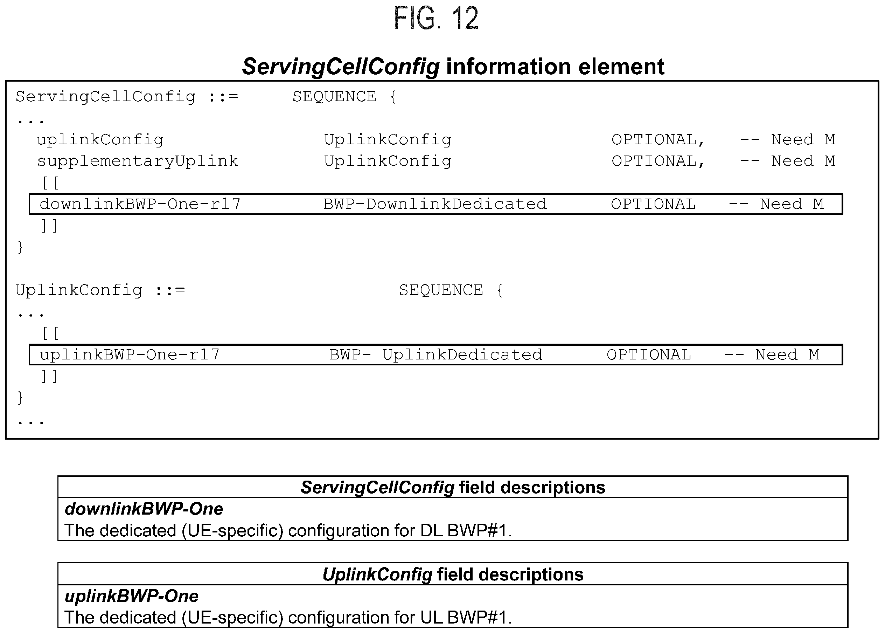

The MSG 4 may include any RRC message of an RRC setup message, an RRC resume message, or an RRC (re)establishment message. The RRC message may include an information element (ServingCellConfig) used to perform a configuration (addition or change) in the UE 100 for the serving cell. As illustrated in Fig. 12, ServingCellConfig may include an information element (downlinkBWP-One-r17) indicating a dedicated (UE specific) configuration for the downlink BWP #1 and an information element (uplinkBWP-One-r17) indicating a dedicated (UE specific) configuration for the uplink BWP #1. downlinkBWP-One-r17 and uplinkBWP-One-r17 may be dedicated configuration information for designating a designated BWP number (specifically, the BWP number 1) other than the BWP number 0 and configuring the dedicated BWP (BWP #1) used in the RRC connected state. Therefore, the base station 200 (the transmitter 222) can transmit the dedicated configuration information by dedicated signaling during the random access procedure. The RedCap UE 100B (the receiver 121) can receive the dedicated configuration information by dedicated signaling during the random access procedure.

The RedCap UE 100B (the controller 140) configures the dedicated BWP on the basis of downlinkBWP-One-r17 and uplinkBWP-One-r17 in ServingCellConfig. As illustrated in Fig. 9, the dedicated BWP is configured as the BWP (BWP #1) with the BWP number of 1. In a case of the RRC connected state, the RedCap UE 100B (the controller 140) uses the BWP #1 based on this configuration.

The RedCap UE 100B (the controller 140) transitions from the RRC idle state or the RRC inactive state to the RRC connected state by the random access procedure. Thereafter, the RedCap UE 100B (the controller 140) in the RRC connected state performs communication with the base station 200 by using the dedicated BWP.

As described above, the base station 200 (the controller 240) designates a designated BWP number other than the BWP number (that is, 0) in which the initial BWP used for the general UE 100A is configured, and transmits the second common configuration information for configuring the separate initial BWP via the SIB 1. The RedCap UE 100B (the receiver 121) receives the second common configuration information from the base station 200 via the SIB 1. The base station 200 (the controller 240) and the RedCap UE 100B (the controller 140) perform the random access procedure by using the separate initial BWP. Accordingly, even in a case in which BWP #0 used for the general UE 100A is configured in the RedCap UE 100B by common signaling, it is possible to configure the separate initial BWP, as the BWP #1, in the RedCap UE 100B on the basis of the second common configuration information received via the SIB 1. As a result, the RedCap UE 100B can use the separate initial BWP during the initial access.

In addition, the RedCap UE 100B (the receiver 121) may designate a designated BWP number during the random access procedure, and receive the dedicated configuration information for configuring the dedicated BWP used in the RRC connected state from the base station 200 by dedicated signaling. Accordingly, the RedCap UE 100B (the receiver 121) can use the separate initial BWP immediately after the random access procedure ends, that is, immediately after the MSG 4 is received.

Further, the RedCap UE 100B (the controller 140) may monitor paging by using the separate initial BWP. Accordingly, the RedCap UE 100B can use the separate initial BWP even before the random access procedure is performed.

In addition, the RedCap UE 100B (the controller 140) may perform the random access procedure by using the separate initial BWP in a case in which the frequency band of the separate initial BWP does not include the frequency band of the MIB initial BWP, and may perform the random access procedure by using the separate initial BWP or the MIB initial BWP in a case in which the frequency band of the separate initial BWP includes the frequency band of the MIB initial BWP. Accordingly, in a case in which the frequency band of the separate initial BWP does not include the frequency band of the MIB initial BWP, the RedCap UE 100B (the controller 140) does not perform the random access procedure by using the MIB initial BWP for the general UE 100A, and thus the occurrence of interference with the general UE 100A can be suppressed.

### (2) Second Operation Example

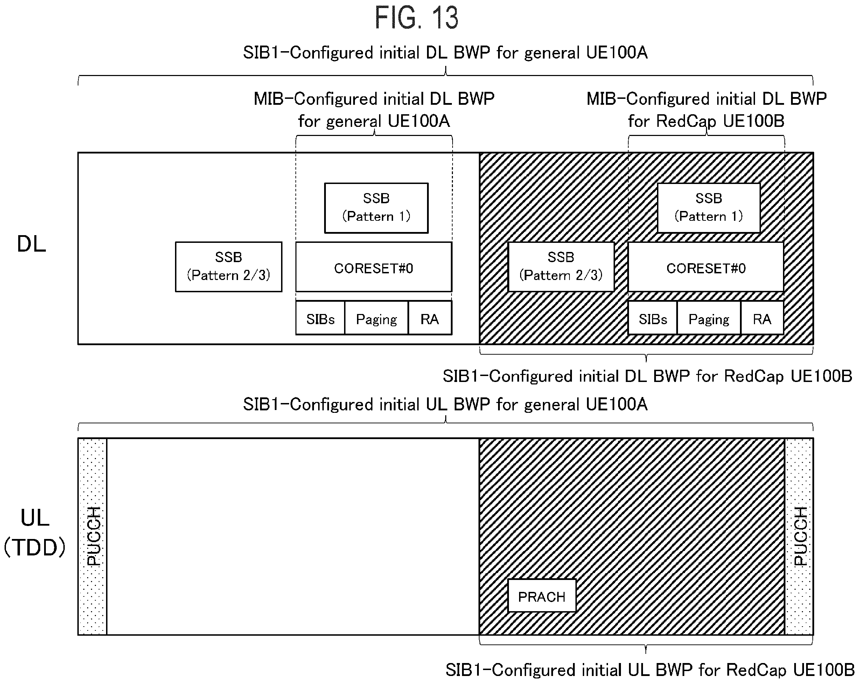

A second operation example will be described with reference to Fig. 13, focusing on differences from the above-described operation example. In the first operation example, the MIB initial BWP is shared by the general UE 100A and the RedCap UE 100B, but in the present operation example, an MIB initial BWP for the RedCap UE 100B is provided.

As illustrated in Fig. 13, the separate initial BWP is arranged at an end on one side of the initial BWP for the general UE 100 A in the frequency direction. Specifically, the separate initial downlink BWP is arranged at an end on one side of the initial downlink BWP for the general UE 100A in the frequency direction. In addition, even in a case in which the communication scheme is the TDD scheme, the separate initial uplink BWP is arranged at the end on one side of the initial uplink BWP for the general UE 100A in the frequency direction. In a case in which the communication scheme is the FDD scheme, the operation is similar to the first operation example.

In the present operation example, an area in which the SSB is transmitted (hereinafter, an SSB area), the CORESET #0, an area in which the SIB is transmitted (hereinafter, an SIB area), an area in which paging (paging DCI) is transmitted (hereinafter, a paging area), and an area in which the RA response (MSG2) is transmitted (hereinafter, a RA region) are arranged in the separate initial BWP (SIB1-Configured initial DL BWP for RedCap UE 100B) for the RedCap UE 100B configured by the SIB 1. Therefore, the configurations related to the SSB, the CORESET #0, the SIB, and the random access procedure are made in the UE 100 so that the separate initial BWP is used. The cell in the separate initial BWP is regarded as a cell specific to the RedCap UE 100B.

On the other hand, the SSB area, the CORESET #0, the SIB area paging area, and the RA area are arranged, for the general UE 100A, within the initial uplink BWP for the general UE 100A and outside the separate initial BWP. Since various areas for the RedCap UE 100B are arranged in the separate initial BWP separately from various areas for the general UE 100A, the RedCap UE 100B (the controller 140) can suppress the occurrence of interference with the general UE 100A, for example, by performing the random access procedure by using the separate initial BWP.

Further, in a case in which the common configuration information for configuring the separate initial BWP is not received, the RedCap UE 100B (the controller 140) may perform the random access procedure by using the MIB initial BWP which is the initial BWP configured on the basis of the MIB. Accordingly, for example, in a case in which the MIB initial BWP is the MIB initial BWP for the RedCap UE 100B, the RedCap UE 100B (the controller 140) can suppress the occurrence of interference with the general UE 100 A by performing the random access procedure by using the MIB initial BWP.

The RedCap UE 100B (the controller 140) may perform the random access procedure by using the MIB initial BWP in a case in which the configuration based on the common configuration information is not completed although the common configuration information is received.

Further, in a case in which the common configuration information for configuring the separate initial BWP is not received, but the bandwidth of the initial BWP (that is, the BWP #0) for the general UE 100A configured by the SIB 1 exceeds the maximum bandwidth (which may be referred to as a UE maximum bandwidth) supported by the RedCap UE 100B, the RedCap UE 100B (the controller 140) may perform the random access procedure by using the MIB initial BWP. On the other hand, in a case in which the common configuration information is not received and the bandwidth of the initial BWP for the general UE 100A does not exceed the maximum bandwidth supported by the RedCap UE 100B, the RedCap UE 100B (the controller 140) may perform the random access procedure by using the initial BWP for the general UE 100A. While the bandwidth of the MIB initial BWP is limited to any of 24, 48, and 96 PRBs, the network 10 (the base station 200) can configure the bandwidth, other than 24, 48, and 96 PRBs, as the bandwidth of the initial BWP configured by the SIB 1, and the bandwidth of the initial BWP configured by the SIB 1 is not limited to 24, 48, and 96 PRBs. Therefore, for example, in a case in which the bandwidth of the initial BWP configured by the SIB 1 for the general UE 100A is wider than the bandwidth of the MIB initial BWP, the occurrence of interference can be suppressed, as compared with the case of using the MIB initial BWP, by performing the random access procedure by using the initial BWP for the general UE 100A.

Further, the RedCap UE 100B (the controller 140) may monitor paging by using the separate initial BWP. Accordingly, the RedCap UE 100B can use the separate initial BWP even before the random access procedure is performed. Further, as compared with a case in in which paging is monitored using the initial BWP (specifically, the MIB initial BWP for the general UE 100A) for the general UE 100A as in a third operation example to be described later, the RedCap UE 100B (the controller 140) can omit retuning between the MIB initial BWP for the general UE 100A and the separate initial BWP each time when paging is performed, so that a processing time associated with retuning is unnecessary and power consumption caused by a retuning process load can be reduced.

### (3) Third Operation Example

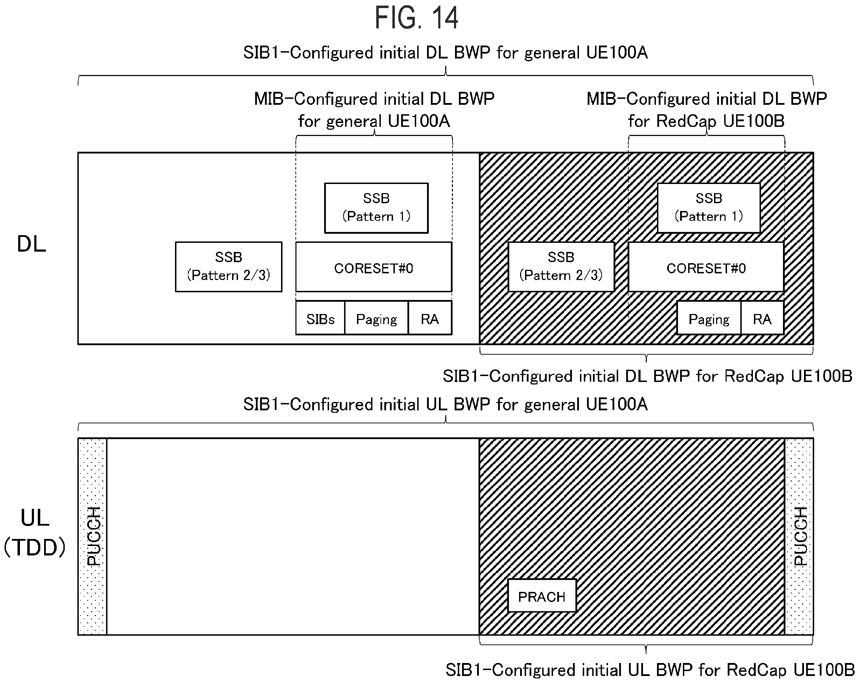

A third operation example will be described with reference to Fig. 14, focusing on differences from the above-described operation examples. In the present operation example, unlike the second operation example, the SIB area is not arranged in the separate initial BWP (SIB 1-Configured initial DL BWP for RedCap UE 100B). The other points are similar to those of the second operation example.

The RedCap UE 100B (the receiver 121) receives the SIB 1 and other SIBs by using the initial BWP for the general UE 100A (specifically, the MIB initial BWP for the general UE 100A) in order to acquire the SIB 1 and other SIBs. The RedCap UE 100B (the receiver 121) may use the initial BWP for the general UE 100A only when receiving the SIB, and may use the initial BWP for the RedCap UE 100B when receiving other information (for example, the SSB, the paging DCI, or the like). Therefore, the RedCap UE 100B may use the initial BWP for the general UE 100A only in a case in which it is difficult to execute the communication process using the initial BWP for the RedCap UE 100B, and may use the initial BWP for the RedCap UE 100B in a case in which it is possible to execute the communication process using the initial BWP for the RedCap UE 100B.

### (4) Fourth Operation Example

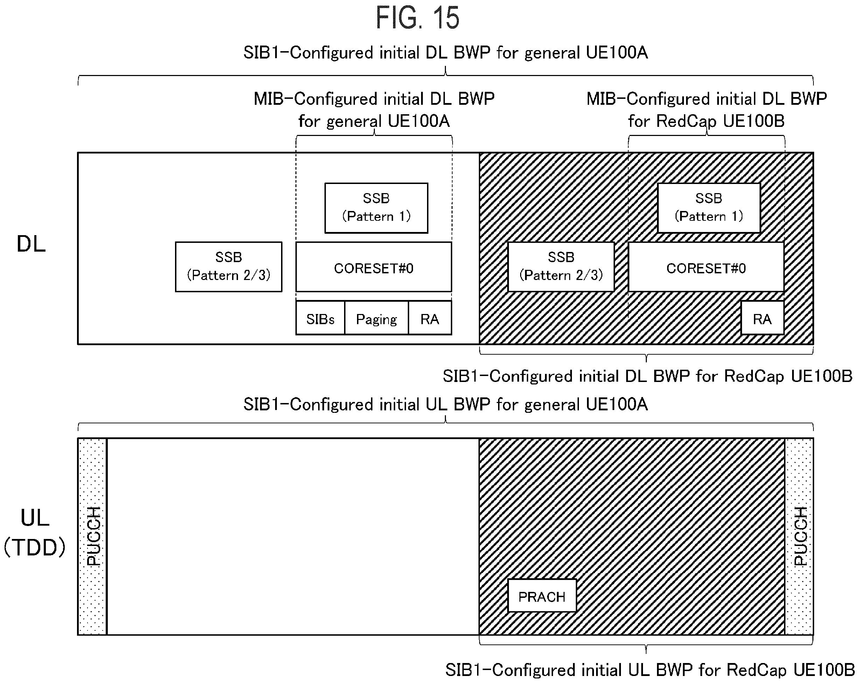

A fourth operation example will be described with reference to Fig. 15, focusing on differences from the above-described operation examples. In the present operation example, unlike the third operation example, no paging area is arranged in the separate initial BWP (SIB 1-Configured initial DL BWP for RedCap UE 100B). The other points are similar to those of the third operation example.

The RedCap UE 100B (the receiver 121) monitors paging by using the initial BWP for the general UE 100A in order to perform paging.

### (5) Fifth Operation Example

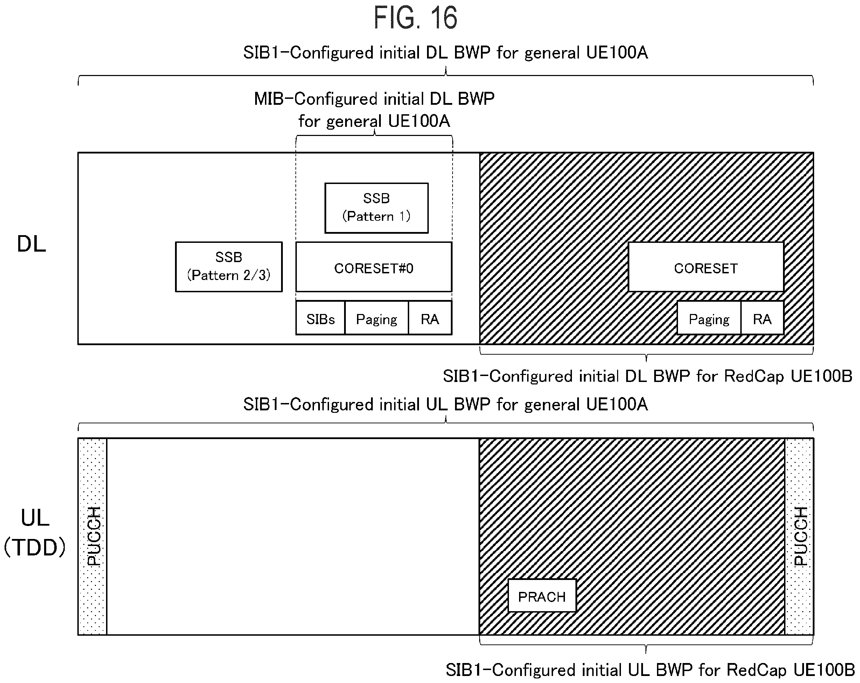

A fifth operation example will be described with reference to Fig. 16, focusing on differences from the above-described operation examples. In the present operation example, the CORESET, the paging area, and the RA area are arranged in the separate initial BWP (SIB 1-Configured initial DL BWP for RedCap UE 100B). On the other hand, the SSB area, the CORESET #0, and the SIB are not arranged in the separate initial BWP.

The RedCap UE 100B (the controller 140) may monitor a set of PDCCH candidates in the CORESET, monitor paging, or perform the random access procedure by using the separate initial BWP. On the other hand, the RedCap UE 100B (the controller 140) may use the MIB initial BWP for the general UE 100A in a case in which other processes (for example, reception of the SSB, reception of the SIB, and the like) are performed. Therefore, the RedCap UE 100B may use the initial BWP for the general UE 100A only in a case in which it is difficult to execute the communication process using the initial BWP for the RedCap UE 100B, and may use the initial BWP for the RedCap UE 100B in a case in which it is possible to execute the communication process using the initial BWP for the RedCap UE 100B.

Further, as in the present operation example, in a case in which the initial BWP (specifically, the downlink BWP #1) for the RedCap UE 100B does not include the entire CORESET #0 in the frequency domain, the base station 200 (the controller 140) may configure the field of the information element (downlinkBWP-One-r17) indicating the configuration of the downlink BWP #1 in DownlinkConfigCommonSIB, that is, DownlinkConfigCommonSIB may include downlinkBWP-One-r17. The RedCap UE 100B (the controller 140) may determine that the initial BWP for the RedCap UE 100B does not include the entire CORESET #0 in the frequency domain on the basis of downlink BWP-One-r17. In this case, the RedCap UE 100B (the controller 140) may perform, for example, reception of the SSB, reception of the SIB, or the like by using the MIB initial BWP for the general UE 100A.

### (6) Sixth Operation Example

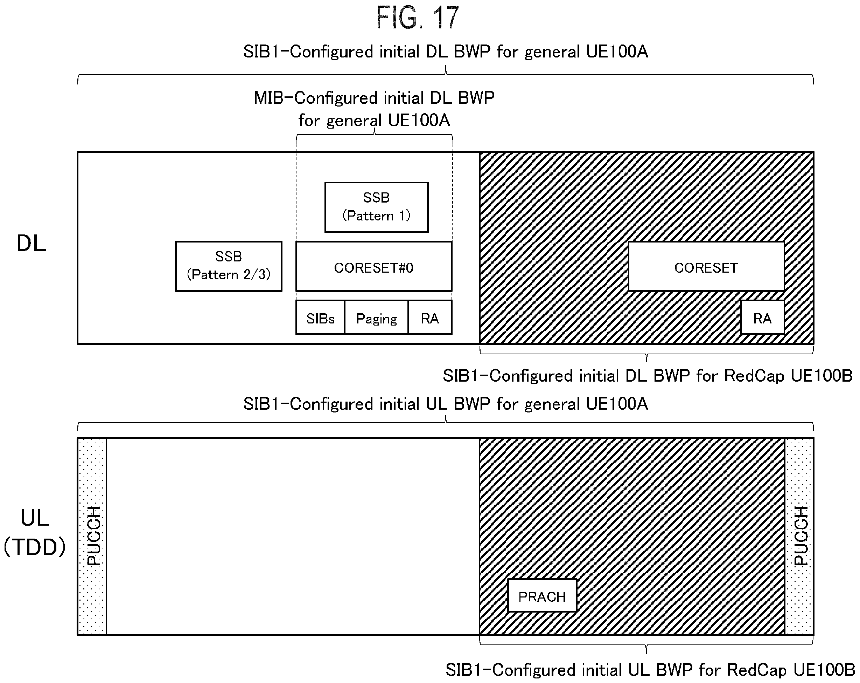

A sixth operation example will be described with reference to Fig. 17, focusing on differences from the above-described operation examples. In the present operation example, the CORESET and the RA area are arranged in the separate initial BWP (SIB 1-Configured initial DL BWP for RedCap UE 100B). On the other hand, the SSB area, the CORESET #0, the SIB area, and the paging area are not arranged in the separate initial BWP.

The RedCap UE 100B (the controller 140) may monitor a set of PDCCH candidates in the CORESET or perform the random access procedure by using the separate initial BWP. On the other hand, the RedCap UE 100B (the controller 140) may use the MIB initial BWP for the general UE 100A in a case in which other processes (for example, reception of the SSB, monitoring of paging, reception of the SIB, or the like) are performed.

### (Other Embodiments)

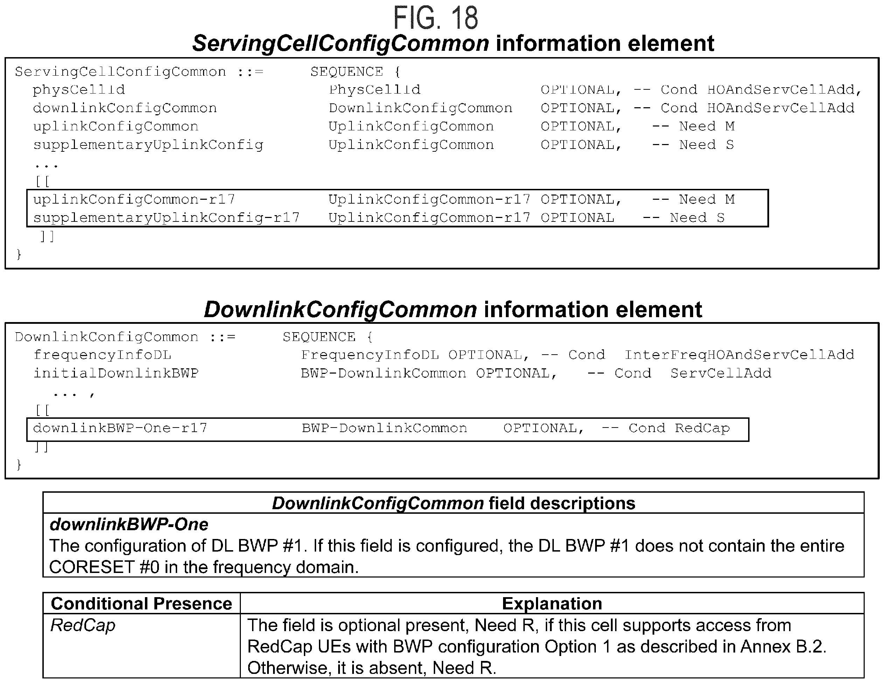

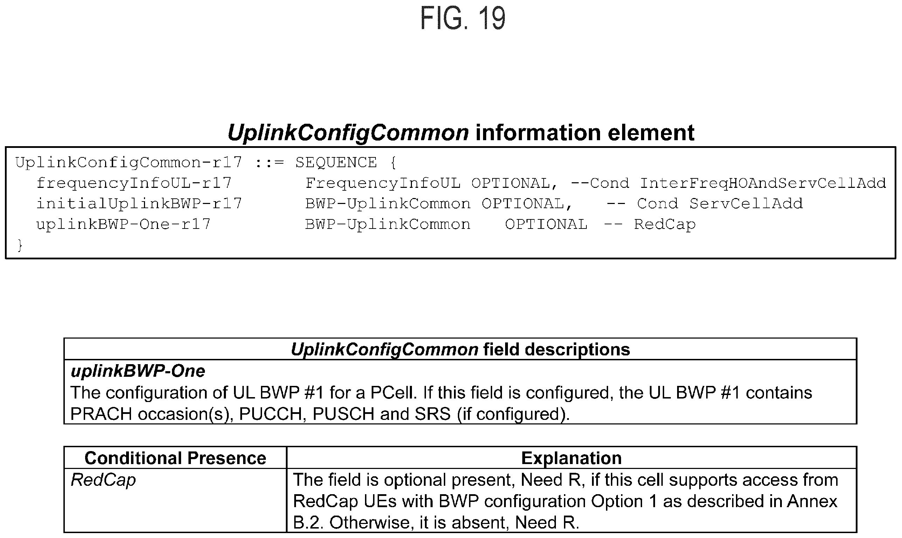

In each of the operation examples described above, the base station 200 (the controller 140) may designate a designated BWP number (for example, the BWP number 1) other than the BWP number 0, and transmit the RRC message, which includes the dedicated configuration information for configuring the dedicated BWP (BWP #1) used in the RRC connected state in the target cell to be RRC connected after the handover, to the RedCap UE 100B which is in the RRC connected state. The RRC message may include the information element (ServingCellConfigCommon) used to configure the cell-specific parameter of the serving cell (target cell) of the UE 100. As illustrated in Figs. 18 and 19, ServingCellConfigCommon may include the information element (downlinkBWP-One-r17) indicating the dedicated (UE common) configuration for the downlink BWP #1 and the information element (uplinkBWP-One-r17) indicating the dedicated (UE common) configuration for the uplink BWP #1. Therefore, the base station 200 (the transmitter 222) can transmit the dedicated configuration information by dedicated signaling before the handover procedure from the source cell (serving cell), which the RedCap UE 100B is RRC connected to, to the target cell is completed. The RedCap UE 100B (the receiver 121) can perform communication with the target cell by using the BWP with the designated BWP number by using the dedicated configuration information during or after the handover procedure.

In the above-described embodiment, the BWP number 1 is designated as the designated BWP number other than the BWP number 0, but the present invention is not limited thereto. Any one of the BWP number 2 to the maximum configuration number (up to 4 in the existing 3GPP technical specification) supported by the RedCap UE 100B may be designated.

In the above-described embodiment, in a case in which the SSB area, the CORESET #0, the SIB area, the paging area, and the RA area are arranged in the separate initial BWP (SIB 1-Configured initial DL BWP for RedCap UE 100B) for the RedCap UE 100B configured by the SIB 1 (in the case of the second operation example), the base station 200 (the transmitter 222) may designate the BWP number 0 without designating a designated BWP number other than the BWP number 0, and transmit the SIB (for example, the SIB 1) including the common configuration information for configuring the separate initial BWP to the RedCap UE 100B. The common configuration information may be, for example, BWP-DownlinkCommon and BWP-UplinkCommon in ServingCellConfigCommon. The RedCap UE 100B may configure the separate initial BWP as the BWP #0 on the basis of the common configuration information. In this case, even though the first common configuration information is included in the SIB, the RedCap UE 100B may not to configure the initial BWP for the general UE 100A based on the first common configuration information as the BWP #0. In this case, the base station 200 (the controller 240) can configure the BWP for the RedCap UE 100B by the operation described in the existing 3GPP technical specification.

Further, in a case in which at least one of the SSB area, the CORESET #0, the SIB area, the paging area, and the RA area is not arranged in the separate initial BWP for the RedCap UE 100B configured by the SIB 1, the base station 200 (the transmitter 222) may transmit the SIB including the first common configuration information and the second common configuration information, similarly to the above-described embodiment.

In the above-described embodiments, the mobile communication system based on the NR is described as the example of the mobile communication system 1. However, the mobile communication system 1 is not limited to this example. The mobile communication system 1 may be a system conforming to the TS of any of LTE or other generation systems (for example, sixth generation) of the 3GPP standard. The base station 200 may be an eNB providing protocol terminations of E-UTRA user plane and control plane toward the UE 100 in LTE. The mobile communication system 1 may be a system conforming to a TS defined in a standard other than the 3GPP standard. The base station 200 may be an integrated access and backhaul (IAB) donor or an IAB node.

In the above-described embodiments, the mobile communication system based on the NR is described as the example of the mobile communication system 1. However, the mobile communication system 1 is not limited to this example. The mobile communication system 1 may be a system conforming to the TS of any of LTE or other generation systems (for example, sixth generation) of the 3GPP standard. The base station 200 may be an eNB providing protocol terminations of E-UTRA user plane and control plane toward the UE 100 in LTE. The mobile communication system 1 may be a system conforming to a TS defined in a standard other than the 3GPP standard.

The steps in the operation of the above-described embodiments may not necessarily be executed in the chronological order according to the order illustrated in the flowchart or the sequence diagram. For example, the steps in the operation may be performed in an order different from the order described in the flowchart or the sequence diagram, or may be performed in parallel. In addition, some of the steps in the operation may be removed or additional steps may be added to the process. Furthermore, each operation flow described above needs not be necessarily implemented separately and independently, and a combination of two or more operation flows can be implemented. For example, some steps of one operation flow may be added to other operation flows, or some steps of one operation flow may be replaced with some steps of other operation flows.

A program for causing a computer to execute each process performed by the UE 100 or the base station 200 may be provided. The program may be recorded in a computer readable medium. The program may be installed in the computer by using the computer readable medium. Here, the computer readable medium in which the program is recorded may be a non-transitory recording medium. The non-transitory recording medium is not particularly limited, but may be, for example, a recording medium such as a compact disk read only memory (CD-ROM) or a digital versatile disc read only memory (DVD-ROM). Furthermore, a circuit that executes each process to be performed by the UE 100 or the base station 200 may be integrated, and at least a part of the UE 100 or the base station 200 may be configured as a semiconductor integrated circuit (a chipset or a system on chip (SoC)).

In the above-described embodiment, "transmit" may mean performing a process of at least one layer in a protocol stack used for transmission, or may mean physically transmitting a signal wirelessly or by wire. Alternatively, "transmit" may mean a combination of performing of the process of at least one layer and physically transmitting of a signal wirelessly or by wire. Similarly, "receive" may mean performing a process of at least one layer in a protocol stack used for reception, or may mean physically receiving a signal wirelessly or by wire. Alternatively, "receive" may mean a combination of performing of the processing of at least one layer and physically receiving of a signal wirelessly or by wire. Similarly, "acquire (obtain/acquire)" may mean acquiring information from stored information, may mean acquiring information from information received from other nodes, or may mean acquiring information by generating the information. Similarly, the descriptions "on the basis of" and "depending on/in response to" do not mean "only on the basis of" or "depending only on" unless explicitly stated otherwise. The description "on the basis of" means both "only on the basis of" and "at least in part on the basis of." Similarly, the description "according to" means both "only according to" and "at least partially according to." Similarly, "include" and "comprise" do not mean to include only the listed items, but mean that the terms may include only the listed items or may include additional items in addition to the listed items. Similarly, in the present disclosure, "or" does not mean exclusive OR but means OR. Moreover, any reference to elements using designations such as "first", "second", and the like used in the present disclosure does not generally limit the amount or order of those elements. These designations may be used in the present disclosure as a convenient method to distinguish between two or more elements. Therefore, references to first and second elements do not mean that only two elements can be employed therein or that the first element should precede the second element in any form. In the present disclosure, when articles such as a, an, and the in English are added by translation, these articles include a plurality of articles unless the context clearly indicates otherwise.

Although the present disclosure has been described in accordance with examples, it is understood that the present disclosure is not limited to the examples or structures. Various modifications or modifications within an equivalent range are also included in the present disclosure. In addition, various combinations or modes, or other combinations or modes including only one element, more elements, or less elements are also included within the scope and idea of the present disclosure.

### (Supplementary Notes)

Features related to the above-described embodiment are additionally described.

### (Supplementary Note 1)

A communication apparatus (100, 100B) with communication capabilities reduced as compared to another communication apparatus (100, 100A), the communication apparatus comprising:
a receiver (121) configured to receive, from a base station (200), common configuration information which designates a designated bandwidth part number other than a bandwidth part number in which an initial bandwidth part used for the another communication apparatus (100, 100A) is configured and configures a separate initial bandwidth part different from the initial bandwidth part via a system information block; and
a controller (140) configured to perform a random access procedure by using the separate initial bandwidth part.

### (Supplementary Note 2)

The communication apparatus (100, 100B) according to supplementary note 1,
wherein, during the random access procedure, the receiver (121) is configured to designate the designated bandwidth part number, and receive dedicated configuration information for configuring a dedicated bandwidth part used in a radio resource control (RRC) connected state from the base station (200) by dedicated signaling.

### (Supplementary Note 3)

The communication apparatus (100, 100B) according to supplementary note 1 or 2,
wherein the controller (140) is configured to monitor paging by using the separate initial bandwidth part.

### (Supplementary Note 4)

The communication apparatus (100, 100B) according to any one of supplementary notes 1 to 3,
wherein the controller (140) is configured to
perform the random access procedure by using the separate initial bandwidth part in a case in which a frequency band of the separate initial bandwidth part does not include a frequency band of an MIB initial bandwidth part that is an initial bandwidth part configured on a basis of a master information block, and
perform the random access procedure by using the separate initial bandwidth part or the MIB initial bandwidth part in a case in which the frequency band of the separate initial bandwidth part includes the frequency band of the MIB initial bandwidth part.

### (Supplementary Note 5)

The communication apparatus (100, 100B) according to any one of supplementary notes 1 to 4,
wherein in a case in which the common configuration information is not received, the controller (140) is configured to perform the random access procedure by using an MIB initial bandwidth part that is an initial bandwidth part configured on a basis of a master information block.

### (Supplementary Note 6)

The communication apparatus (100, 100B) according to supplementary note 5,
wherein in a case in which the common configuration information is not received, the controller (140) is configured to
perform the random access procedure by using the MIB initial bandwidth part when a bandwidth of the initial bandwidth part exceeds a maximum bandwidth supported by the communication apparatus (100, 100B), and
perform the random access procedure by using the initial bandwidth part when the bandwidth of the initial bandwidth part does not exceed the maximum bandwidth.

### (Supplementary Note 7)

Abase station (200) that performs communication with a communication apparatus (100, 100B) with communication capabilities reduced as compared to another communication apparatus (100, 100A), the base station comprising:
a transmitter (222) configured to transmit common configuration information which designates a designated bandwidth part number other than a bandwidth part number in which an initial bandwidth part used for the another communication apparatus (100, 100A) is configured and configures a separate initial bandwidth part different from the initial bandwidth part via a system information block; and
a controller (240) configured to perform a random access procedure with the communication apparatus (100, 100B) by using the separate initial bandwidth part.

### (Supplementary Note 8)

A communication method performed by a communication apparatus (100, 100B) with communication capabilities reduced as compared to another communication apparatus (100, 100A), the communication method comprising the steps of:
receiving, from a base station (200), common configuration information which designates a designated bandwidth part number other than a bandwidth part number in which an initial bandwidth part used for the another communication apparatus (100, 100A) is configured and configures a separate initial bandwidth part different from the initial bandwidth part via a system information block; and
performing a random access procedure by using the separate initial bandwidth part.

## Claims

1. A communication apparatus (100, 100B) with communication capabilities reduced as compared to another communication apparatus (100, 100A), the communication apparatus comprising:
a receiver (121) configured to receive, from a base station (200), common configuration information which designates a designated bandwidth part number other than a bandwidth part number in which an initial bandwidth part used for the another communication apparatus (100, 100A) is configured and configures a separate initial bandwidth part different from the initial bandwidth part via a system information block; and
a controller (140) configured to perform a random access procedure by using the separate initial bandwidth part.

2. The communication apparatus (100, 100B) according to claim 1,
wherein, during the random access procedure, the receiver (121) is configured to designate the designated bandwidth part number, and receive dedicated configuration information for configuring a dedicated bandwidth part used in a radio resource control (RRC) connected state from the base station (200) by dedicated signaling.

3. The communication apparatus (100, 100B) according to claim 1 or 2,
wherein the controller (140) is configured to monitor paging by using the separate initial bandwidth part.

4. The communication apparatus (100, 100B) according to claim 1 or 2,
wherein the controller (140) is configured to
perform the random access procedure by using the separate initial bandwidth part in a case in which a frequency band of the separate initial bandwidth part does not include a frequency band of an MIB initial bandwidth part that is an initial bandwidth part configured on a basis of a master information block, and
perform the random access procedure by using the separate initial bandwidth part or the MIB initial bandwidth part in a case in which the frequency band of the separate initial bandwidth part includes the frequency band of the MIB initial bandwidth part.

5. The communication apparatus (100, 100B) according to claim 1 or 2,
wherein in a case in which the common configuration information is not received, the controller (140) is configured to perform the random access procedure by using an MIB initial bandwidth part that is an initial bandwidth part configured on a basis of a master information block.

6. The communication apparatus (100, 100B) according to claim 5,
wherein in a case in which the common configuration information is not received, the controller (140) is configured to
perform the random access procedure by using the MIB initial bandwidth part when a bandwidth of the initial bandwidth part exceeds a maximum bandwidth supported by the communication apparatus (100, 100B), and
perform the random access procedure by using the initial bandwidth part when the bandwidth of the initial bandwidth part does not exceed the maximum bandwidth.

7. A base station (200) that performs communication with a communication apparatus (100, 100B) with communication capabilities reduced as compared to another communication apparatus (100, 100A), the base station comprising:
a transmitter (222) configured to transmit common configuration information which designates a designated bandwidth part number other than a bandwidth part number in which an initial bandwidth part used for the another communication apparatus (100, 100A) is configured and configures a separate initial bandwidth part different from the initial bandwidth part via a system information block; and
a controller (240) configured to perform a random access procedure with the communication apparatus (100, 100B) by using the separate initial bandwidth part.

8. A communication method performed by a communication apparatus (100, 100B) with communication capabilities reduced as compared to another communication apparatus (100, 100A), the communication method comprising the steps of:
receiving, from a base station (200), common configuration information which designates a designated bandwidth part number other than a bandwidth part number in which an initial bandwidth part used for the another communication apparatus (100, 100A) is configured and configures a separate initial bandwidth part different from the initial bandwidth part via a system information block; and
performing a random access procedure by using the separate initial bandwidth part.
